# FASCICULE DE BREVET EUROPEEN

(11) **EP 2 743 108 B1**
(45) Date de publication et mention de la délivrance du brevet: **25.04.2018**
(21) Numéro de dépôt: 13197000.6
(22) Date de dépôt: 12.12.2013
(51) Int. Cl.: B60H 1/00

(54) **Circuit de conditionnement d'air, notamment pour véhicule automobile**
Klimaanlagenschaltkreis, insbesondere für Kraftfahrzeug
Air-conditioning circuit, in particular for motor vehicle

(30) Priorité: 14.12.2012 FR 1262076
(43) Date de publication de la demande: 18.06.2014
(73) Titulaire: VALEO SYSTEMES THERMIQUES, 78320 Le Mesnil Saint-Denis (FR)
(72) Inventeur: Abdelillah, Lakhal, 78230 LE PECQ (FR); Aoun, Bernard, 75014 PARIS (FR)
(74) Mandataire: Tran, Chi-Hai

(56) Documents cités:
- FR-A1- 2 949 386
- FR-A5- 2 031 669
- US-A- 5 641 016
- US-A1- 2003 019 232
- US-A1- 2004 011 070
- US-A1- 2007 267 169

## Description

L'invention concerne un circuit de conditionnement d'air, notamment pour véhicule automobile, comme divulgué par FR 2 949 386 A1. On connaît un circuit de conditionnement d'air pour véhicule automobile comprenant une boucle de climatisation, pourvue d'un condenseur permettant un échange de chaleur entre un fluide frigorigène et un fluide caloporteur, et un circuit de refroidissement dudit fluide caloporteur.

Il a déjà été proposé en ce sens des condenseurs présentant une première partie, permettant d'effectuer une condensation du fluide frigorigène, et une seconde partie, placée en aval selon le sens de circulation du fluide frigorigène, permettant d'effectuer un sous-refroidissement dudit fluide frigorigène, lesdites première et seconde parties étant traversées par le même circuit de fluide caloporteur, en particulier de l'eau glycolée, pour l'échange de chaleur.

Dans une architecture différente, il est possible d'utiliser deux échangeurs distincts pour la condensation et le sous refroidissement, chacun des échangeurs permettant de la sorte un échange de chaleur avec un fluide caloporteur différent. On peut ainsi prévoir que ladite boucle de climatisation et ledit circuit de refroidissement comportent chacun un échangeur de chaleur, respectivement pour le sous refroidissement du fluide frigorigène en sortie du condenseur et pour le refroidissement du fluide caloporteur dudit circuit de refroidissement, disposés en face avant du véhicule pour un échange de chaleur, d'une part, entre le fluide frigorigène et un flux d'air incident et, d'autre part, entre le fluide caloporteur et ledit flux d'air. La condensation est de la sorte réalisée par échange de chaleur avec le fluide caloporteur et le sous-refroidissement par échange de chaleur avec le flux d'air incident.

Lesdits échangeurs sont globalement en forme de boîtier parallélépipédique rectangle, disposés en général en regard d'une ouverture de calandre de face avant du véhicule automobile selon une certaine surface de ladite ouverture de calandre. Le déplacement du véhicule et/ou un groupe moto-ventilateur produisent ledit flux d'air incident.

Dans une première configuration, les échangeurs sont disposés l'un derrière l'autre selon le trajet du flux d'air, ce qui permet d'adopter une large surface pour chacun des échangeurs. Il peut cependant être intéressant de limiter les pertes de charge sur l'air. Pour diverses raisons, il peut également être souhaité de disposer les échangeurs côte à côte de façon à ce qu'ils soient traversés en parallèle par le flux d'air. La surface disponible pour chacun des échangeurs est alors restreinte.

Par ailleurs, ladite boucle de climatisation et ledit circuit de refroidissement nécessitent une certaine énergie pour l'entraînement du fluide frigorigène et la circulation du fluide caloporteur, respectivement.

Il existe ainsi un besoin pour optimiser le rendement thermique d'un tel circuit de conditionnement d'air.

Il est proposé en ce sens un circuit de conditionnement d'air pour véhicule automobile comprenant une boucle de climatisation pourvue d'un condenseur permettant un échange de chaleur entre un fluide frigorigène et un fluide caloporteur, et un circuit de refroidissement dudit fluide caloporteur, ladite boucle de climatisation et ledit circuit de refroidissement comportant chacun au moins un échangeur de chaleur, respectivement pour un sous refroidissement du fluide frigorigène en sortie du condenseur et pour un refroidissement du fluide caloporteur, lesdits échangeurs de chaleur étant configurés pour être traversés par un flux d'air F pour un échange de chaleur avec lesdits échangeurs.

Selon l'invention, le rapport S/St de la surface d'échange S dudit échangeur de chaleur pour le sous refroidissement du fluide frigorigène relativement à la surface St de passage du flux d'air à travers lesdits des échangeurs est égal à au moins 0,15 et à au plus 0,7.

Par surface d'échange et/ou de passage, on entend, par exemple, la surface frontale balayée par le flux d'air incident. Autrement dit, il s'agit, par exemple, de la surface frontale de l'échangeur, les éventuelles boîtes collectrices des échangeurs n'étant pas prises en compte. De plus, lesdits échangeurs présenteront un coefficient d'échange de chaleur sur l'air proche ou au moins comparable, c'est-à-dire ne différant pas de plus du simple au double.

Il a été remarqué que, dans ladite plage de valeurs du rapport de surfaces d'échangeurs, la puissance disponible pour l'évaporateur du circuit de conditionnement d'air et/ou le rendement thermique dudit circuit, c'est-à-dire le rapport de transfert de chaleur réalisé par le circuit de conditionnement relativement à l'énergie nécessitée pour le fonctionnement du circuit, atteignent un maximum qui correspond à une configuration optimale du circuit. Cette optimisation est par ailleurs peu dépendante du débit du fluide de refroidissement dans ledit circuit de refroidissement ni du débit du fluide frigorigène dans la boucle de climatisation.

En dehors de ladite plage de valeurs du rapport de surfaces d'échangeurs, les performances du circuit sont dégradées.

Selon un premier mode de réalisation, lesdits échangeurs sont positionnés côte à côte dans le flux d'air et ledit rapport S/St est défini par le rapport S/(S+S') de la surface d'échange S dudit échangeur de chaleur pour le sous refroidissement du fluide frigorigène relativement à la surface d'échange totale S+S' des échangeurs.

Selon un second mode de réalisation, lesdits échangeurs sont positionnés l'un derrière l'autre dans le flux d'air et ledit rapport S/St est défini par le rapport S/S' de la surface d'échange S dudit échangeur de chaleur pour le sous refroidissement du fluide frigorigène relativement à la surface d'échange S' dudit échangeur pour le refroidissement du fluide caloporteur.

Cela étant, on a repéré des résultats particulièrement avantageux, tout spécialement en ce qui concerne le rendement thermique, pour un intervalle de rapport des surfaces allant de 0,15 à 0,5, par exemple autour de 0,30, notamment de 0,25 à 0,35, voire dans la partie haute de la fourchette, autrement dit, de 0,25 à 0,50, voire de 0,30 à 0,45.

Selon différents modes de réalisation de l'invention,
- lesdits échangeurs sont de type tubes-intercalaires ;
- ledit circuit de refroidissement est un circuit dit basse température du véhicule automobile, comprenant au moins une pompe de mise en circulation du fluide caloporteur ;
- ledit circuit de refroidissement est configuré pour refroidir ledit condenseur de la boucle de climatisation et pour refroidir d'autres éléments du véhicule ;
- le condenseur est de type comportant des plaques empilées définissant entre elles des lames de circulation du fluide frigorigène, en sorte qu'une lame de fluide frigorigène se trouve entre deux lames de fluide caloporteur.

Ces caractéristiques et d'autres de l'invention apparaitront plus clairement au regard de la description ci-dessous d'un mode de réalisation de l'invention en référence au dessin annexé, sur lequel :
La figure 1 est une vue schématique d'un circuit de conditionnement d'air conforme à l'invention ;
La figure 2 est une vue de face d'un échangeur de chaleur du circuit conforme à l'invention, donnée dans le but d'illustrer les dimensions en cause dans l'invention ;
La figure 3 illustre la variation du rendement thermique ou COP du circuit de conditionnement d'air de la figure 1 en fonction de la valeur dudit rapport de surfaces des échangeurs du circuit ; et
La figure 4 illustre la variation de la puissance disponible pour l'évaporateur du circuit de conditionnement d'air en fonction de la valeur dudit rapport de surfaces des échangeurs du circuit.

Dans la description qui suit, des références identiques sont utilisées pour désigner des éléments analogues ou identiques.

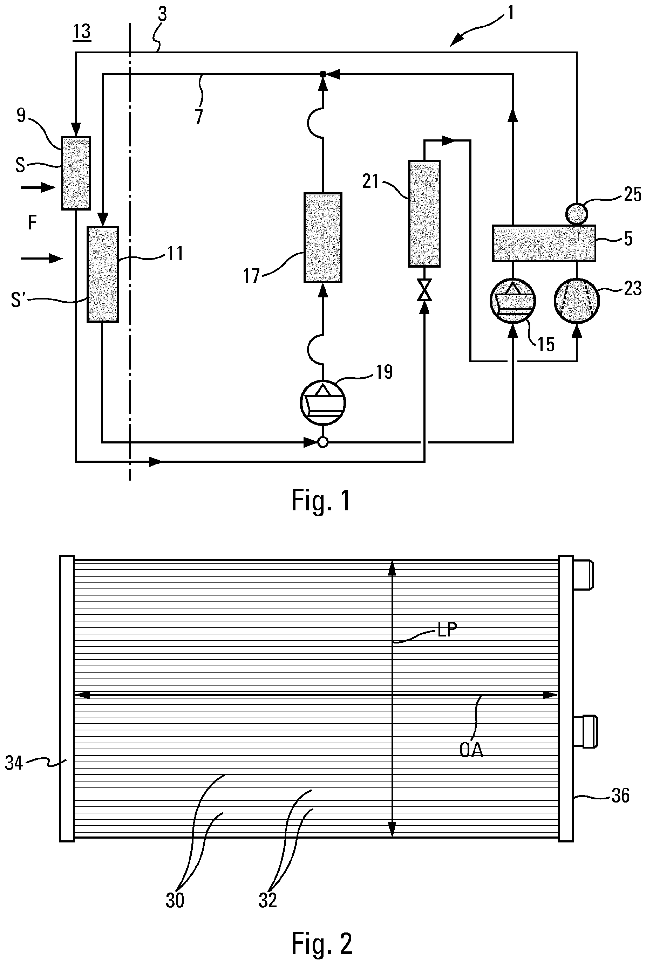

Comme illustré à la figure 1, l'invention concerne un circuit de conditionnement d'air 1 pour véhicule automobile.

Ce circuit 1 comprend une boucle de climatisation 3 pourvue d'un condenseur 5 permettant un échange de chaleur entre un fluide frigorigène et un fluide caloporteur, et un circuit de refroidissement 7 dudit fluide caloporteur.

Le fluide réfrigérant est avantageusement un fluide de type dit R1234yf ou R134a. Le fluide caloporteur est, par exemple, de l'eau glycolée.

Ladite boucle de climatisation 3 et ledit circuit de refroidissement 7 comportent chacun au moins un échangeur de chaleur 9, 11, respectivement, pour un sous refroidissement du fluide frigorigène en sortie du condenseur 5 et pour un refroidissement du fluide caloporteur.

Lesdits échangeurs de chaleur 9, 11 sont disposés côte à côte dans un compartiment de face avant 13 du véhicule, ici le compartiment moteur, notamment en regard de la calandre du véhicule, non représentée, pour être traversés en parallèle par un flux d'air F incident.

Ledit flux d'air F est produit ici par le déplacement du véhicule et/ou par une source de ventilation d'air du véhicule automobile, non représentée.

Le condenseur 5 de la boucle de climatisation est avantageusement de type comportant des plaques empilées définissant entre elles des lames de circulation du fluide frigorigène, en sorte qu'une lame de fluide frigorigène se trouve entre deux lames de fluide caloporteur.

Les échangeurs 9, 11 sont en forme de boîtier parallélépipédique rectangle, étant orientés avec leur plan perpendiculaire au flux d'air F.

Comme illustré à la figure 2, ils sont avantageusement du type à tubes et intercalaires, c'est-à-dire pourvu d'un faisceau de tubes 30 de passage du fluide caloporteur, disposés parallèlement les uns aux autres et entre lesquels sont disposés des ailettes ou intercalaires 32 ondulés de refroidissement, ledit faisceau étant situé entre des collecteurs 34, 36, en particulier d'entrée et/ou sortie du fluide.

Lesdits échangeurs de chaleur 9, 11 présenteront avantageusement des caractéristiques d'échange de chaleur sur l'air comparables, voire proches, à tout le moins du même ordre de grandeur. On entend par là, notamment, leur pas de tubes, leur hauteur de tubes, leur pas d'intercalaires et/ou leur épaisseur d'intercalaires.

Lesdits échangeurs de chaleur 9, 11 sont, par exemple, rapportés sur le châssis du véhicule. Ils pourront encore être positionnés sur une même structure de support, elle-même rapportée sur le châssis. D'autres échangeurs pourront être positionnés en amont et/ou en aval selon la circulation du flux d'air.

Si l'on se reporte de nouveau à la figure 1, on constate que ledit circuit de refroidissement 7 du fluide caloporteur est avantageusement un circuit dit basse température du véhicule automobile, c'est-à-dire un circuit distinct d'un éventuel circuit, dit haute température, servant au refroidissement d'un moteur thermique du véhicule. Ledit circuit de refroidissement 7 comprend au moins une pompe 15 de mise en circulation du fluide caloporteur. Un tel circuit est configuré pour refroidir le condenseur 5 de la boucle de climatisation par échange de chaleur entre le fluide frigorigène et le fluide caloporteur circulant dans ledit condenseur. Il peut également être configuré pour refroidir d'autres éléments du véhicule, tel un composant électrique 17 du véhicule, notamment moteur et/ou batterie, en parallèle du condenseur, ici au moyen d'une autre pompe 19 de circulation du fluide caloporteur du circuit.

Ladite boucle de climatisation 3 comporte en outre, ainsi que représenté, un évaporateur 21, un compresseur 23 et une réserve 25 de fluide frigorigène. La réserve 25 de fluide, dite bouteille, est plus particulièrement destinée à former un tampon de liquide frigorigène dans le circuit, apte à séparer les phases liquide et gaz du fluide frigorigène.

Le fluide frigorigène circule selon les flèches indiquées sur le circuit, depuis le compresseur 23 vers le condenseur 5, la bouteille 25, l'échangeur 9 de sous refroidissement, l'évaporateur 21 et enfin le compresseur 23. Ledit condenseur 5 et ledit compresseur 23 pourront être situés dans le compartiment moteur, tandis que l'évaporateur pourra être positionné dans un boîtier de climatisation situé sous une planche de bord du véhicule.

Les échangeurs 9 et 11 ont chacun une surface d'échange avec le flux d'air F, respectivement S et S'.

Dans le cas d'échangeurs de type tubes-intercalaires, tels qu'évoqués plus haut, ladite surface d'échange est définie, par exemple, par la surface frontale du faisceau, c'est-à-dire, la surface définie par le produit des distances cotées OA et LF à la figure 2, en particulier de la surface frontale du faisceau dans sa partie munie d'intercalaires.

Le rapport de la surface S dudit échangeur 9 pour le sous refroidissement du fluide frigorigène relativement à la surface totale St des échangeurs, à savoir la surface S de l'échangeur de boucle de climatisation 9 plus la surface S' de l'échangeur 11 de circuit de refroidissement, selon leur plan d'extension (perpendiculaire au flux F) est égal à au moins 0,15, de préférence égal à au moins 0,20, et à au plus 0,7, notamment 0,5, de préférence égal à au plus 0,45.

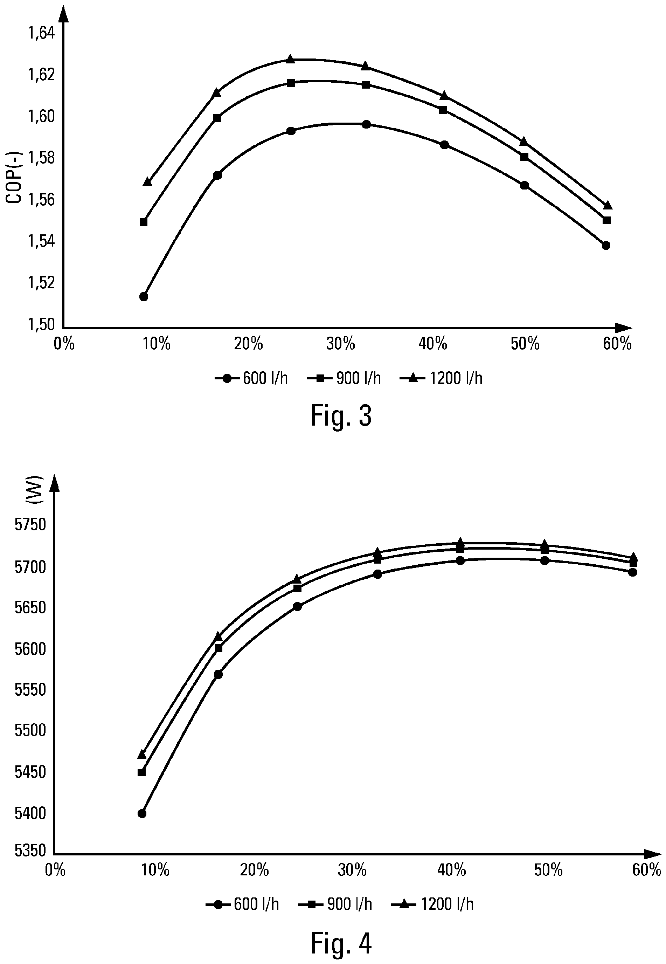

Dans cette plage de valeurs S/(S+S') de rapport de surface d'échangeur et comme le montre les figures 3 et 4, la puissance disponible pour l'évaporateur et/ou le rendement thermique du circuit de conditionnement d'air, dit encore COP, sont les plus élevés. Le maximum du COP est plus précisément situé dans une plage de 0,25 à 0,35.

A la figure 3, les courbes d'évolution du COP en fonction de ladite variation de surface des échangeurs progressent de façon sensiblement parallèle quel que soit le débit de fluide caloporteur dans le circuit de refroidissement 7. A titre d'illustration de ceci, le débit est choisi ici à trois niveaux de valeur différents, soit 600l/h, 900l/h et 1200l/h correspondant aux courbes à points ronds, carrés et en relief, respectivement. Naturellement, le COP croît avec le débit du fluide caloporteur, ce qui explique le décalage en hauteur des courbes, lesquelles demeurent néanmoins avec un maximum situé dans ladite plage de valeurs S/(S+S') de rapports de surface d'échangeur.

Comme on le voit sur ces courbes, depuis la gauche vers la droite sur le dessin, le COP croit selon une pente ascendante avec la valeur du rapport de surface d'échangeur, jusqu'à un maximum, au sommet des courbes, qui s'étend en arrondi puis décroît ensuite, selon une pente descendante.

La pente descendante des courbes est moins forte que leur pente ascendante, de sorte qu'il peut être intéressant dans une mise en configuration optimale du circuit de conditionnement d'air de jouer sur la pente descendante où la variation du COP sera moins sensible.

Ce qui précède montre qu'il est avantageux pour un circuit de conditionnement d'air, tel que décrit, relativement à une surface adéquate des échangeurs du circuit, de configurer ce circuit dans une plage de valeurs du rapport de surface d'échangeurs telle que précisée ci-dessus, voire à un maximum du COP, qui correspond à une configuration optimale de rendement thermique du circuit, à savoir un rapport maximal de transfert de chaleur réalisé par le circuit relativement à l'énergie nécessitée pour le fonctionnement du circuit.

A la figure 4, on constate que la puissance disponible pour l'évaporateur est optimisée autour d'une valeur du rapport S/(S+S') des surfaces des échangeurs située autour de 45%. L'optimisation est particulièrement significative à partir de 20%. Là encore, l'optimisation ne dépend pas ou peu des débits de fluide.

L'invention apporte ainsi un circuit de conditionnement d'air, notamment pour véhicule automobile, dont le fonctionnement, en particulier le rendement thermique est optimisé.

En variante, lesdits échangeurs 9, 11 pourront être positionnés l'un derrière l'autre dans le flux d'air et ledit rapport S/St est alors défini par le rapport S/S' de la surface d'échange S dudit échangeur de chaleur 9 pour le sous refroidissement du fluide frigorigène relativement à la surface d'échange S' dudit échangeur pour le refroidissement du fluide caloporteur 11.

## Revendications

1. Circuit de conditionnement d'air (1) pour véhicule automobile comprenant une boucle de climatisation (3) pourvue d'un condenseur (5) permettant un échange de chaleur entre un fluide frigorigène et un fluide caloporteur, et un circuit de refroidissement (7) dudit fluide caloporteur, ladite boucle de climatisation (3) et ledit circuit de refroidissement (7) comportant chacun au moins un échangeur de chaleur (9, 11), respectivement pour un sous refroidissement du fluide frigorigène en sortie du condenseur (5) et pour un refroidissement du fluide caloporteur, lesdits échangeurs de chaleur (9, 11) étant configurés pour être traversés par un flux d'air F pour un échange de chaleur avec lesdits échangeurs (9, 11), **caractérisé en ce que** le rapport S/St de la surface d'échange S dudit échangeur de chaleur (9) pour le sous refroidissement du fluide frigorigène relativement à la surface de passage du flux d'air à travers lesdits des échangeurs (9, 11) étant égal à au moins 0,15 et à au plus 0,7, et **en ce que** les échangeurs (9, 11) sont positionnés côte à côte ou l'un derrière l'autre dans le flux d'air, lorsque les échangeurs (9, 11) sont positionnés côte à côte, ledit rapport S/St est défini par le rapport S/(S+S') de la surface d'échange S dudit échangeur de chaleur (9) pour le sous refroidissement du fluide frigorigène relativement à la surface d'échange totale S+S' des échangeurs (9, 11), et lorsque les échangeurs (9, 11) sont positionnés l'un derrière l'autre, ledit rapport S/St est défini par le rapport S/S' de la surface d'échange S dudit échangeur de chaleur (9) pour le sous refroidissement du fluide frigorigène relativement à la surface d'échange S' dudit échangeur pour le refroidissement du fluide caloporteur (11).

2. Circuit de conditionnement d'air (1), selon l'une quelconque des revendications précédentes, dans lequel ledit rapport S/St de surface des échangeurs (9, 11) est situé dans une plage de 0,15 à 0,5, en particulier de 0,25 à 0,5.

3. Circuit de conditionnement d'air (1), selon l'une quelconque des revendications précédentes, dans lequel lesdits échangeurs (9, 11) sont du type tubes-intercalaires.

4. Circuit de conditionnement d'air (1), selon l'une quelconque des revendications précédentes, dans lequel ledit circuit de refroidissement (7) est un circuit dit basse température du véhicule automobile, comprenant au moins une pompe (15) de mise en circulation du fluide caloporteur.

5. Circuit de conditionnement d'air (1), selon l'une quelconque des revendications précédentes, dans lequel ledit circuit de refroidissement (7) est configuré pour refroidir ledit condenseur (5) de la boucle de climatisation (3) et pour refroidir d'autres éléments (17) du véhicule.

6. Circuit de conditionnement d'air (1), selon l'une quelconque des revendications précédentes, dans lequel le condenseur (5) est de type comportant des plaques empilées définissant entre elles des lames de circulation du fluide frigorigène, en sorte qu'une lame de fluide frigorigène se trouve entre deux lames de fluide caloporteur.

## Patentansprüche

1. Klimaanlage (1) für ein Kraftfahrzeug, welche einen Klimatisierungskreislauf (3), der mit einem Verflüssiger (5) versehen ist, der einen Wärmeaustausch zwischen einem Kältemittel und einem Wärmeträgerfluid ermöglicht, und einen Kühlkreislauf (7) des Wärmeträgerfluids umfasst, wobei der Klimatisierungskreislauf (3) und der Kühlkreislauf (7) jeweils wenigstens einen Wärmetauscher (9, 11) für eine Unterkühlung des Kältemittels am Ausgang des Verflüssigers (5) bzw. für eine Kühlung des Wärmeträgerfluids aufweist, wobei die Wärmetauscher (9, 11) dafür eingerichtet sind, von einem Luftstrom F für einen Wärmeaustausch mit den Wärmetauschern (9, 11) durchströmt zu werden,
**dadurch gekennzeichnet, dass** das Verhältnis S/St der Austauschfläche S des Wärmetauschers (9) für die Unterkühlung des Kältemittels zu der Durchgangsfläche des Luftstroms durch die die Wärmetauscher (9, 11) mindestens = 0,15 und höchstens gleich 0,7 ist,
und dadurch, dass die Wärmetauscher (9, 11) in dem Luftstrom nebeneinander oder hintereinander positioniert sind, wenn die Wärmetauscher (9, 11) nebeneinander positioniert sind, das Verhältnis S/St durch das Verhältnis S/(S+S') der Austauschfläche S des Wärmetauschers (9) für die Unterkühlung des Kältemittels zur Gesamtaustauschfläche S+S' der Wärmetauscher (9, 11) definiert ist, und wenn die Wärmetauscher (9, 11) hintereinander positioniert sind, das Verhältnis S/St durch das Verhältnis S/S' der Austauschfläche S des Wärmetauschers (9) für die Unterkühlung des Kältemittels zur Austauschfläche S' des Wärmetauschers für die Kühlung des Wärmeträgerfluids (11) definiert ist.

2. Klimaanlage (1) nach einem der vorhergehenden Ansprüche, wobei das Flächenverhältnis S/St der Wärmetauscher (9, 11) im Bereich von 0,15 bis 0,5 und insbesondere von 0,25 bis 0,5 liegt.

3. Klimaanlage (1) nach einem der vorhergehenden Ansprüche, wobei die Wärmetauscher (9, 11) vom Typ mit Rohren und Abstandhaltern sind.

4. Klimaanlage (1) nach einem der vorhergehenden Ansprüche, wobei der Kühlkreislauf (7) ein sogenannter Niedertemperaturkreislauf des Kraftfahrzeugs ist, der mindestens eine Umwälzpumpe (15) für das Wärmeträgerfluid aufweist.

5. Klimaanlage (1) nach einem der vorhergehenden Ansprüche, wobei der Kühlkreislauf (7) dafür eingerichtet ist, den Verflüssiger (5) des Klimatisierungskreislaufs (3) zu kühlen und andere Elemente (17) des Fahrzeugs zu kühlen.

6. Klimaanlage (1) nach einem der vorhergehenden Ansprüche, wobei der Verflüssiger (5) von einem Typ ist, der gestapelte Platten aufweist, die zwischen sich Schichten der Zirkulation des Kältemittels definieren, derart, dass sich eine Schicht Kältemittel zwischen zwei Schichten des Wärmeträgerfluids befindet.

## Claims

1. Air-conditioning circuit (1) for a motor vehicle, comprising an air-conditioning loop (3) provided with a condenser (5) allowing a heat exchange between a refrigerant fluid and a heat-transfer fluid, and a circuit (7) for cooling the said heat-transfer fluid, the said air-conditioning loop (3) and the said cooling circuit (7) each comprising at least one heat exchanger (9, 11), respectively for supercooling the refrigerant fluid at the outlet of the condenser (5) and for cooling the heat-transfer fluid, the said heat exchangers (9, 11) being configured to be traversed by an air flow F for a heat exchange with the said exchangers (9, 11), **characterized in that** the ratio S/St of the exchange area S of the said heat exchanger (9) for the supercooling of the refrigerant fluid relative to the area for the passage of the air flow through the said the exchangers (9, 11) being equal to at least 0.15 and to at most 0.7, and **in that** the exchangers (9, 11) are positioned side to side or one behind the other in the air flow, when the exchangers (9, 11) are positioned side to side, the said ratio S/St is defined by the ratio S/(S+S') of the exchange area S of the said heat exchanger (9) for the supercooling of the refrigerant fluid relative to the total exchange area S+S' of the exchangers (9, 11), and when the exchangers (9, 11) are positioned one behind the other, the said ratio S/St is defined by the ratio S/S' of the exchange area S of the said heat exchanger (9) for the supercooling of the refrigerant fluid relative to the exchange area S' of the said exchanger for the cooling of the heat-transfer fluid (11).

2. Air-conditioning circuit (1), according to any one of the preceding claims, in which the said area ratio S/St of the exchangers (9, 11) is situated in a range from 0.15 to 0.5, in particular from 0.25 to 0.5.

3. Air-conditioning circuit (1), according to any one of the preceding claims, in which the said exchangers (9, 11) are of the tube-inserts type.

4. Air-conditioning circuit (1), according to any one of the preceding claims, in which the said cooling circuit (7) is a so-called low-temperature circuit of the motor vehicle, comprising at least one pump (15) for circulating the heat-transfer fluid.

5. Air-conditioning circuit (1), according to any one of the preceding claims, in which the said cooling circuit (7) is configured to cool the said condenser (5) of the air-conditioning loop (3) and to cool other elements (17) of the vehicle.

6. Air-conditioning circuit (1), according to any one of the preceding claims, in which the condenser (5) is of the type comprising stacked plates defining between them channels for the circulation of the refrigerant fluid in such a way that one refrigerant fluid channel is situated between two heat-transfer fluid channels.
